(19) Europäisches Patentamt
European Patent Office
Office européen des brevets

(11) **EP 2 092 349 B1**

(12) **FASCICULE DE BREVET EUROPEEN**

(45) Date de publication et mention
de la délivrance du brevet:
**06.09.2017 Bulletin 2017/36**

(21) Numéro de dépôt: **07858472.9**

(22) Date de dépôt: **17.10.2007**

(51) Int Cl.:
***G01P 3/44*** *(2006.01)*    ***G01P 3/66*** *(2006.01)*
***G01P 13/04*** *(2006.01)*

(86) Numéro de dépôt international:
**PCT/FR2007/001715**

(87) Numéro de publication internationale:
**WO 2008/049999 (02.05.2008 Gazette 2008/18)**

(54) **DISPOSITIF ET PROCEDE POUR DETERMINER POSITION, VITESSE ET SENS DE MOUVEMENT D'UN ELEMENT MOBILE**

EINRICHTUNG UND VERFAHREN ZUR BESTIMMUNG VON POSITION, GESCHWINDIGKEIT UND RICHTUNG DER BEWEGUNG EINES MOBILELEMENTS

DEVICE AND METHOD FOR DETERMINING POSITION SPEED AND DIRECTION OF MOVEMENT OF A MOBILE ELEMENT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **18.10.2006 FR 0609146**

(43) Date de publication de la demande:
**26.08.2009 Bulletin 2009/35**

(73) Titulaire: **Université De Poitiers**
**86034 Poitiers Cedex (FR)**

(72) Inventeur: **ETIEN, Erik**
**86000 Poitiers (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
| | |
|---|---|
| WO-A-01/12453 | WO-A-2006/061737 |
| DE-A1- 4 431 204 | US-A- 5 737 280 |
| US-A1- 2002 190 853 | US-A1- 2004 027 241 |

EP 2 092 349 B1

**Description**

La présente invention se rapporte à un dispositif et à un procédé permettant de caractériser un élément mobile suivant une trajectoire fixe à partir d'un support d'information.

De nombreux équipements appartenant au domaine industriel, automobile ou de l'automatique tels que des moteurs, micromoteurs, pompes, alternateurs, alterno-démarreurs sont pourvus d'un élément mobile en rotation pour lequel, dans le cadre d'applications diverses, il est nécessaire de pouvoir déterminer les caractéristiques se rapportant à la vitesse tangentielle de déplacement, au sens de déplacement, ou encore à la position.

On connaît dans l'art antérieur des dispositifs faisant appel à des capteurs fixés sur une partie externe de l'arbre d'un moteur, tel qu'un rotor. Certains de ces capteurs fournissent directement une vitesse de rotation de manière analogique. C'est le cas de génératrices tachymétriques qui délivrent une tension proportionnelle à la vitesse de rotation du rotor. D'autres capteurs comme des résolveurs et codeurs déterminent la position du rotor respectivement de manière analogique et numérique, et déterminent la vitesse de rotation par calcul. L'inconvénient de ces capteurs est qu'ils nécessitent une grande minutie lors de leur fabrication et de leur mise en place, ce qui engendre un coût important. Il n'est pas rare en effet, pour des moteurs de faible puissance que le prix d'un capteur dépasse celui du moteur. Par ailleurs ils sont sensibles aux perturbations électromagnétiques.

On connaît aussi dans l'art antérieur la demande de brevet US2005-0076982 qui décrit un dispositif comprenant un module électronique intégré dans un pneumatique et prévu pour remplir certaines fonctionnalités comme la mesure de paramètres tels que la température, la pression et la vitesse de rotation. Le module est alimenté électriquement par des batteries et comporte un transpondeur RFID et un compte-tours. La vitesse de rotation est alors déterminée sur la base de données provenant d'un compte-tours, qui sont transmises par un transpondeur RFID à une station de base. D'autres dispositifs du même type sont connus avec des capteurs exploitant des phénomènes physiques particuliers tels que la déformation mécanique, la force de Coriolis.

L'inconvénient dans un tel dispositif est que le transpondeur RFID ne remplit qu'une fonction de relais par la transmission de données relatives à des mesures émanant de capteurs divers. De plus de tels dispositifs associant des capteurs avec un transpondeur RFID ne sont pas électriquement indépendants et nécessitent d'être démontés régulièrement afin d'en changer les batteries.

On connaît aussi la demande de brevet japonais JP10115626 qui décrit un procédé permettant de déterminer la vitesse de rotation d'un élément mobile à partir d'au moins un support d'information monté sur ledit élément mobile en rotation, et au moins un lecteur comprenant au moins une antenne et un microcontrôleur.

L'inconvénient d'un tel procédé est que le support d'information collé sur l'élément mobile doit, après avoir envoyé un premier signal au lecteur, effectuer une rotation complète avant d'envoyer un second signal pour déterminer la vitesse de rotation. Ce procédé n'est pas adapté aux vitesses lentes.

Le document US2004/0027241 décrit un capteur pour pneu comprenant un dispositif d'interrogation sur le véhicule et un transpondeur sur la roue dans lequel une estimation de vitesse est réalisée par estimation du moment de passage du transpondeur dans le champ du dispositif d'interrogation.

Les documents WO01/12453 et WO2006/061737 décrivent des dispositifs similaires mais dans lesquels c'est la variation de champ qui fournit des indications sur les conditions dynamiques dont la vitesse.

L'invention vise à pallier les inconvénients de l'art "antérieur.

Un des buts de l'invention est de pouvoir caractériser avec une grande précision un élément mobile suivant une trajectoire fixe, en particulier une trajectoire de rotation sans qu'il ait effectué une rotation complète. Un autre but de l'invention est de proposer une caractérisation d'un élément mobile dont la réalisation et la mise en place sont à un coût faible.

Pour ce faire, la présente invention concerne un procédé pour caractériser un élément mobile suivant une trajectoire fixe à partir d'au moins un support d'information monté sur ledit élément mobile, et au moins une antenne et un microcontrôleur, caractérisé en ce que ledit procédé comporte :

- une étape de génération par ladite antenne d'un champ électromagnétique dans un cône englobant une surface dudit élément mobile et définissant une distance constante et connue de parcours du support d'information dans le cône,

- une étape d'émission à un débit binaire fixe, par ledit support d'information, d'un nombre de bits de données en direction de ladite antenne lorsque ledit support d'information est compris dans ledit cône,

- une étape de détermination par ledit microcontrôleur de la vitesse dudit élément mobile suivant ladite trajectoire fixe à partir d'une analyse du nombre de bits de données reçues par ladite antenne et la distance de parcours.

On entend par trajectoire fixe dans cette description une trajectoire finie telle que l'élément mobile ne peut se déplacer que le long de celle-ci. L'élément mobile est susceptible de passer plusieurs fois par au moins un même point fixe de ladite trajectoire.

L'invention permet de caractériser un élément mobile suivant une trajectoire fixe à partir d'un support d'information et d'une antenne et d'un microcontrôleur.

Dans un mode de réalisation particulier, l'élément mobile effectue un mouvement de rotation.

Dans ce cas, l'invention permet de caractériser un élément mobile en rotation à partir d'un support d'information et d'une antenne et d'un microcontrôleur sans que la détermination des caractéristiques de cet élément mobile nécessite qu'il effectue une rotation complète. A chaque exécution d'une rotation de l'élément mobile, au moins un transpondeur passe dans le cône englobant une surface de l'élément mobile afin qu'une mesure de différentes caractéristiques de l'élément mobile soit effectuée à partir d'un échange de données entre le transpondeur et l'antenne.

Dans un autre mode de réalisation particulier, l'élément mobile effectue un mouvement de translation en tant que mouvement de rotation de rayon de courbure infini.

Dans une variante, à partir d'au moins deux supports d'information, ladite caractéristique est le sens de déplacement et/ou la vitesse tangentielle de déplacement et/ou la position dudit élément mobile.

Dans une autre variante, à partir d'au moins un support d'information, ladite caractéristique est la vitesse tangentielle de déplacement et/ou la position dudit élément mobile.

Dans une autre variante, ledit support d'information comprend des données relatives à sa position sur ledit élément mobile.

La présente invention se rapporte aussi à un dispositif comprenant au moins un support d'information monté sur un élément mobile suivant une trajectoire fixe, et au moins une antenne et un microcontrôleur caractérisé en ce que:

- ladite antenne est apte à générer un champ électromagnétique dans un cône englobant une surface de l'élément mobile, et
- ledit support d'information est apte à émettre à un débit binaire fixe un nombre de bits de données en direction de ladite antenne lorsqu'il est dans le cône, et
- ledit microcontrôleur est apte à déterminer au moins une caractéristique dudit élément mobile suivant ladite trajectoire fixe à partir d'une analyse des données reçues par ladite antenne.

Dans une variante, ledit microcontrôleur comprend des moyens de calcul.

Dans une autre variante ledit support d'information est compris dans l'élément mobile.

L'avantage d'un positionnement du support d'information dans l'élément mobile permet de limiter les effets d'usure de ce support d'information sur cet élément mobile. Ceci est notamment rendu possible grâce à l'auto-alimentation de ce support d'information.

Dans une autre variante, ledit support d'information est un transpondeur RFID.

L'avantage d'utiliser un support d'information comme un transpondeur RFID est dû à son faible coût et à ses dimensions qui permettent de le positionner dans divers éléments mobile comme celui d'un servomoteur par exemple.

Dans une autre variante, ladite antenne et ledit microcontrôleur sont compris dans un lecteur.

Dans une autre variante, ledit support d'information est auto-alimenté en énergie.

On comprendra mieux l'invention à l'aide de la description, faite ci-après à titre purement explicatif, d'un mode de réalisation de l'invention, en référence aux figures annexées données comme des exemples non limitatifs et sur lesquelles :

- la figure 1 illustre une vue éclatée d'un moteur électrique dans lequel est implémentée l'invention ;
- la figure 2 illustre une vue d'un mode réalisation comportant un transpondeur RFID ;
- la figure 3 illustre un transpondeur RFID et une station de base ;
- la figure 4 illustre un mode réalisation comportant plusieurs transpondeurs RFID .
- la figure 5 illustre la transmission de données en mode série et à débit binaire fixe.
- la figure 6 illustre un mode de fonctionnement de l'invention.

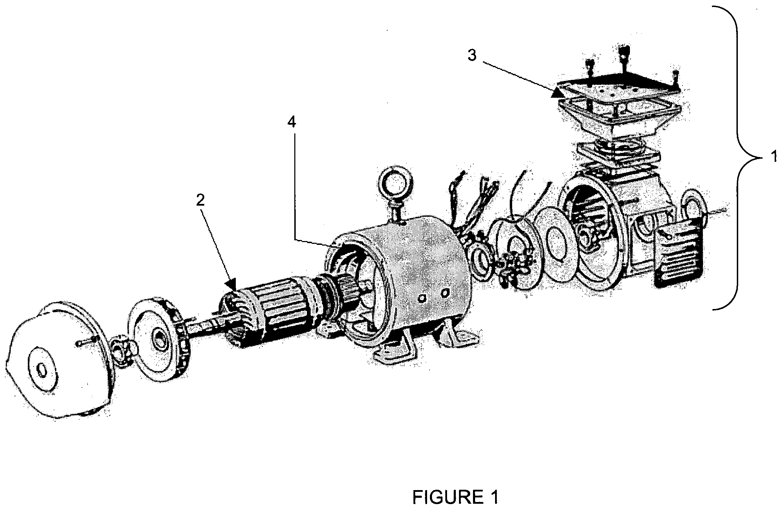

La figure 1 représente le dispositif selon l'invention se rapportant à un moteur électrique 1, pour lequel on détermine les différentes caractéristiques se rapportant à un élément mobile tel qu'un rotor 2. L'élément mobile 2 est alors en mouvement de rotation. Ces caractéristiques correspondent par exemple à une vitesse tangentielle de déplacement, à un sens de déplacement, ou encore à la position du rotor 2. L'invention comprend un support d'information correspondant à un transpondeur (transmetteur/répondeur) RFID 6 (acronyme anglais de Radio Frequency Identification, soit identification par radiofréquence) positionné par des moyens de fixation sur la surface ou à l'intérieur du rotor 2.

Dans la suite, la vitesse tangentielle de déplacement sera désignée par vitesse de rotation et le sens de déplacement par sens de rotation.

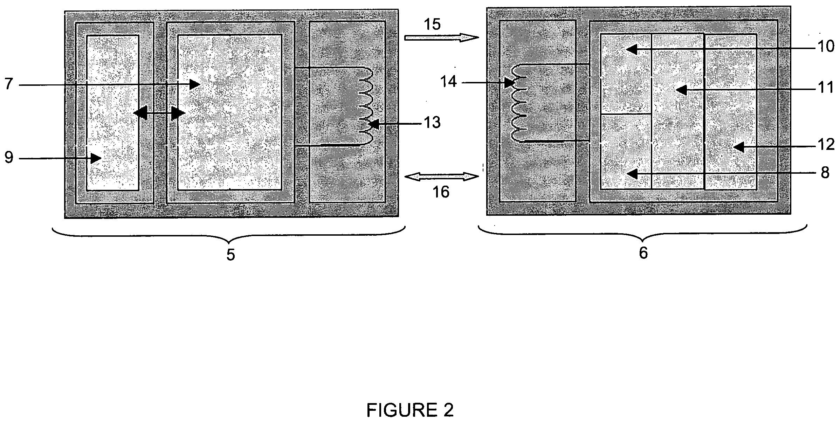

A la figure 2 une antenne 13, montée sur la partie fixe du moteur électrique 1, un stator 4, est positionnée à une faible distance du transpondeur RFID 6. Cette antenne 13 est reliée à un lecteur correspondant ici à une station de base 5 qui est positionnée dans un boîtier d'alimentation 3. L'espace séparant le rotor 2 du stator 4, appelée l'entrefer 17, est de l'ordre de quelques millimètres et nécessite que le transpondeur RFID 6 et l'antenne 13 soient de dimensions réduites.

Dans un autre mode de réalisation un tel dispositif peut être équipé de plusieurs antennes 13 montées sur le stator 4, reliées à une ou plusieurs stations de base 5.

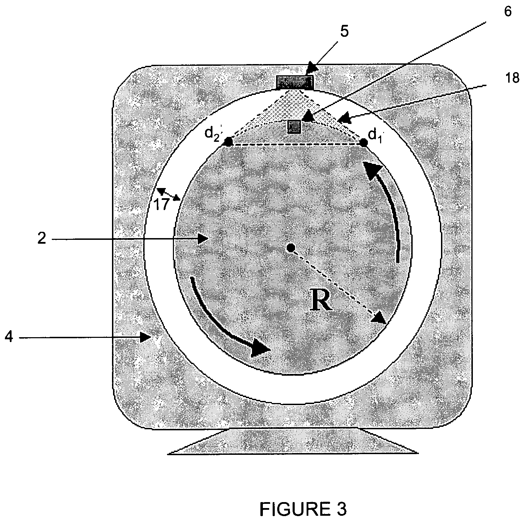

Comme illustré à la figure 3 le transpondeur RFID 6 comprend une antenne 14, une puce 11, des mémoires 8,10,12. Ce transpondeur RFID 6 est de très petite taille et de masse négligeable, offrant ainsi l'avantage de faciliter son intégration dans tout type de dispositif et d'avoir une influence quasi-inexistante sur le comportement du moteur électrique 1.

Le transpondeur RFID 6 comprend une mémoire ROM 8 (acronyme anglais de *Read Only Memory,* soit mémoire à lecture seule), une mémoire RAM 10 (acronyme anglais de *Random Access Memory,* soit *mémoire à accès aléatoire*) et une mémoire EEPROM 12 (acronyme anglais d'Electrically-Erasable Programmable Read-Only Memory, soit mémoire en lecture seule effaçable électriquement). La mémoire ROM 8 contient des données de sécurité ainsi que des instructions d'un programme en charge de fonctions de base telles que le délai de réponse, le contrôle du flux de données, et la gestion de l'énergie. La mémoire RAM 10 est utilisée pour les stockages temporaires de données lors des processus d'interrogation et de réponse. La mémoire EEPROM 12 est une mémoire programmable non volatile qui peut être effacée plusieurs fois et qui permet de stocker des données. Les données stockées sont des données numériques qui comprennent notamment des informations sur la position relative du transpondeur RFID 6 sur le rotor 2.

Le transpondeur RFID 6 est un élément passif qui ne nécessite aucune source d'énergie en dehors de celle fournie par la station de base 5 au moment des échanges de données. En effet, le transpondeur RFID 6 est téléalimenté en énergie 15 par le champ électromagnétique émis par la station de base 5. Cette auto-alimentation du transpondeur RFID 6 offre l'avantage de ne pas nécessiter de maintenance et de pouvoir être encastré dans le rotor 2.

Le transpondeur RFID 6 est paramétrable en fonction des dispositifs dans lesquels il est destiné à être implémenté. On peut ainsi paramétrer une gestion des collisions pour limiter des problèmes d'interférences, modifier des protocoles de communication (ie cryptage de donnée, gestion de la détection d'erreur), gérer un mode de lecture/écriture (ie écriture seule, lecture seule, etc).

Dans la figure 2 la station de base 5 est un dispositif actif, qui comprend un circuit de lecture/écriture 7, un microcontrôleur 9 et une antenne 13 composée d'une inductance, d'un condensateur et d'une résistance.

Le circuit de lecture/écriture 7 assure la transmission et la réception des ondes radios dont les fréquences appartiennent à l'ensemble du spectre de radiofréquence. Quand ce circuit 7 génère l'émission d'ondes radios à des fréquences élevées les échanges de données entre le transpondeur RFID 6 et la station de base 5 se font à des débits plus importants. Les données reçues par l'antenne 13 sont transmises au microcontrôleur 9 qui comprend des moyens d'analyse et de calculs pour le traitement de ces données. Ce microcontrôleur 9 comporte aussi un algorithme d'anticollision pour gérer les problèmes d'interférences afin de permettre à la station de base 5 de pouvoir dialoguer avec le transpondeur RFID 6 lorsque plus d'un transpondeur RFID se trouve dans son champ de détection.

Dans un autre mode de réalisation un des bobinages du stator 4 est utilisé en guise d'antenne car il peut parfois se révéler difficile de placer une antenne appartenant à une station de base 5, sur le stator 4 du moteur électrique 1 à cause de problèmes relatifs à la taille de cette antenne. En fonction d'une valeur d'une inductance d'une phase considérée, un condensateur est déterminé pour accorder un circuit radiofréquence sur la fréquence d'une porteuse. L'ensemble de la station de base 5 est raccordé ensuite directement aux bornes du bobinage dans le boîtier d'alimentation 3 situé sur la carcasse du moteur électrique 1.

La mémoire EEPROM 12 comprise dans le transpondeur RFID 6 comprend un certain nombre de bits de données, dont le nombre est réduit à un minimum suffisant pour pouvoir établir les caractéristiques du rotor 2 du moteur électrique 1, permettant ainsi d'avoir un temps de transaction entre la station de base 5 et le transpondeur RFID 6 adapté :

- au temps de la présence physique du transpondeur RFID 6 dans le champ magnétique délivré par la station de base 5,
- au débit des données binaires,
- au protocole de communication,
- à la quantité de données à échanger, et
- à la gestion de collisions dans le cas de présence de d'autres transpondeurs RFID.

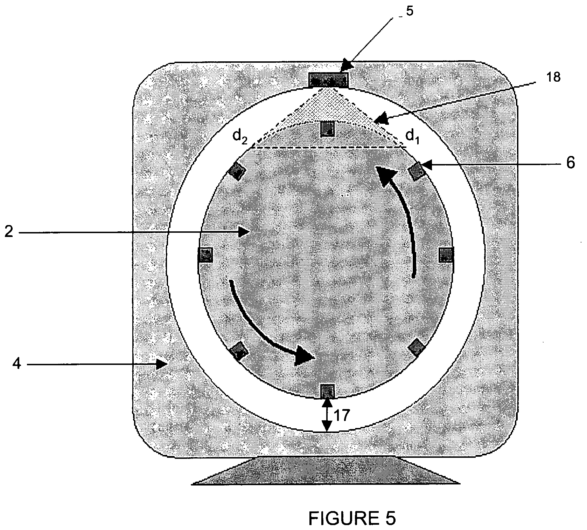

Aux figures 3 et 5 l'antenne 13 de la station de base 5 génère un champ magnétique qui définit un cône d'émission/réception 18 traversant l'entrefer 17 et faisant une intersection avec la surface du rotor 2. Les points d'intersection d1 d'entrée dans le cône 18 et d2 de sortie de ce cône 18 définissent une distance de parcours D=[d1,d2] durant laquelle le transpondeur RFID 6 est sous l'influence du champ électromagnétique transmis par l'antenne 13. Cette distance de parcours D correspond à un arc de cercle sur la surface du rotor 2 qui est constant et est déterminé à partir des données du constructeur de la station de base 5 et des dimensions du moteur.

Lorsque le transpondeur RFID 6 monté sur le rotor 2 passe à proximité de l'antenne 13 de la station de base 5 et pénètre dans le cône 18 en franchissant le point d1, le signal émis par la station de base 5 et transmis par l'antenne 13 au transpondeur RFID 6 alimente en énergie 15 le transpondeur RFID 6 jusqu'à ce qu'il dépasse le point d2. En parallèle un échange de données s'établit entre le transpondeur RFID 6 et la station de base 5 par la transmission de données numériques (suite de 0 et de 1) en mode série avec un débit binaire fixe (en kbits/s) du transpondeur RFID 6 à la station de base 5 par l'intermédiaire de l'antenne 13. La transmission de données se déroule tant que le transpondeur RFID 6 est alimenté en énergie 19.

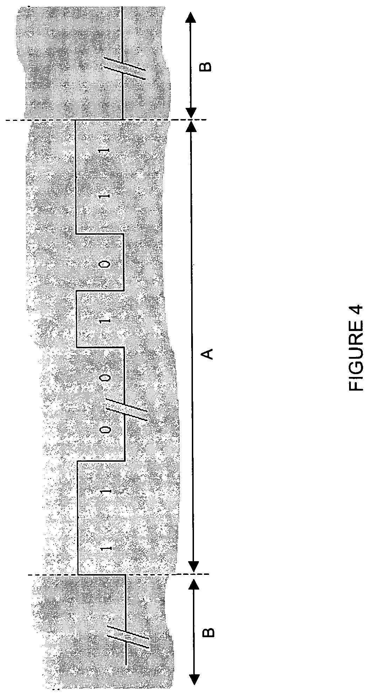

La figure 4 illustre l'émission à un débit fixe d'un nombre de bits de données lorsque le transpondeur RFID 6 est dans le cône 18 d'émission/réception, la zone A, et la non-émission de données lorsqu'il est hors du cône 18, la zone B.

Le débit binaire et plus précisément le nombre de bits de données émis par le transpondeur RFID 6 sont des vecteurs de l'information se rapportant aux caractéristiques du rotor 2.

Ce nombre de bits de données est reçu par la station de base 5 et est analysé par le microcontrôleur.

Le débit binaire est défini avant l'utilisation du dispositif de mesure pour correspondre à l'ordre de grandeur de la vitesse de rotation connu à l'avance et à la précision sur la mesure souhaitée par l'utilisateur dudit dispositif. À partir d'un débit binaire M émis par le support d'information 6, l'antenne 13 reçoit un nombre N de données avec le même débit binaire. Le débit binaire reçu est égal au débit binaire émis.

La précision de la mesure dépend directement du débit d'émission des bits de données à envoyer et de l'ordre de grandeur de la vitesse. Le train de données émises par le transpondeur RFID 6 peut être tronqué lorsque celui-ci sort du cône d'émission de l'antenne 13, de sorte à obtenir une précision au bit près.

Le microcontrôleur 9 comporte dans sa mémoire un programme comprenant diverses instructions lui permettant de compter le nombre de bits de données reçu jusqu'à l'arrêt de la transmission de données c'est-à-dire lorsque le transpondeur RFID 6 a dépassé le point d2, et de déterminer le débit binaire. Des instructions arithmétiques lui permettent d'effectuer les calculs suivants afin de déterminer une caractéristique du rotor, la vitesse de rotation :

$$T = \frac{N}{M} \quad (\text{en secondes})$$

avec T correspondant au temps de parcours mis par le transpondeur RFID 6 pour effectuer la distance D, N correspondant au nombre de bits de données reçu, et M se rapportant au débit binaire.

Dès que le temps T de parcours est déterminé, il est possible d'obtenir une vitesse V de déplacement du transpondeur RFID 6 :

$$V = \frac{D}{T} \quad (\text{en m/s})$$

avec V correspondant à la vitesse de déplacement du transpondeur RFID 6, D la distance entre les points d1 et d2 et T le temps de parcours du transpondeur RFID 6 entre ces deux points.

À partir de la vitesse de déplacement V, la vitesse de rotation du rotor 2 est déduite :

$$\Omega = \frac{V}{R} \quad (\text{en radians/s})$$

avec $\Omega$ la vitesse de rotation du rotor 2, V la vitesse de déplacement du transpondeur RFID 6 et R le rayon du rotor 2.

Cette vitesse de rotation est alors exprimée en tours par minute (tr/min) en faisant :

$$W = \frac{\Omega}{2\pi} \times 60 \quad (\text{en tr/min})$$

avec W la vitesse de rotation en tours par minute, $\Omega$ la vitesse de rotation en radians par seconde (radians/s).

Ainsi l'invention offre l'avantage de déterminer une des caractéristiques du rotor 2, la vitesse de rotation sans qu'il ne soit nécessaire que le rotor 2 ait effectué une rotation complète.

Ce moyen de détermination de la vitesse tangentielle de déplacement s'applique à toute trajectoire fixe de déplacement, et en particulier à une trajectoire linéaire pour laquelle la vitesse est donnée en mètres/s.

La figure 5 illustre un autre mode de réalisation comprenant plusieurs transpondeurs RFID 6 placés à intervalle réguliers sur le rotor 2 d'un moteur électrique avec une antenne 13 montée sur le stator 2. Comme nous l'avons vu précédemment chacun de ces transpondeurs RFID 6 stocke en mémoire des informations relatives à leur position absolue sur le rotor 2. Cette information correspond à des données numériques exprimant par exemple cette position en degré. Dans le dispositif de la figure 5 le rotor comprend huit transpondeurs RFID, avec un premier transpondeur RFID stockant des données numériques de position correspondant à 0°, un second transpondeur RFID consécutif stockant des données numériques de position correspondant à 360°/8 soit 45°, un troisième transpondeur RFID consécutif au second transpondeur stockant des données numériques de positon correspondant à 360°/4 soit 90° ainsi de suite jusqu'au huitième transpondeur.

Cette disposition des transpondeurs RFID 6 permet d'avoir une plus grande précision sur différentes caractéristiques. Dans le cadre de la détermination de la vitesse de rotation, plusieurs mesures de cette vitesse sont effectuées. En effet chaque transpondeur RFID 6 émet à un débit binaire fixe un nombre de bits de données compris dans leur mémoire respective dès leur passage du point d1 au point d2. Le microcontrôleur 9 détermine pour chacun de ces transpondeurs RFID, identifiés par la transmission de données relatives à leur position sur le rotor 2, la vitesse de rotation. Ainsi dès la première rotation, plusieurs déterminations de vitesses de rotation sont déjà effectuées. C'est un avantage pour des équipements dont l'élément mobile à une vitesse de rotation lente.

De plus le microcontrôleur à partir d'instructions émanant du programme informatique stocké dans sa mémoire et des informations sur la position sur le rotor de chacun des transpondeurs RFID 6, est apte à déterminer le sens de rotation du rotor 2 ainsi que sa position. Dans ce mode de réalisation, le dispositif peut comprendre plusieurs antennes 13, montées sur le stator 4 reliées à une ou plusieurs stations de base. Chaque support d'information 6 transmet une information relative à sa position absolue. L'information reçue par l'antenne 13 est ensuite lue par le microcontrôleur 9. Selon l'ordre des informations reçues, le microcontrôleur 9 est en mesure de déterminer l'ordre de passage des supports d'information 6 dans le cône d'émission, et donc de déterminer le sens de rotation de l'élément mobile 2.

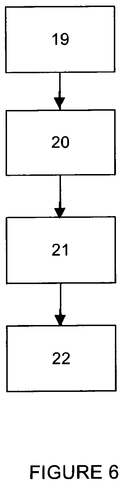

La figure 6 illustre un mode de fonctionnement de l'invention comprenant plusieurs étapes. Une étape de génération 19 d'un champ électromagnétique, par ladite antenne 13 reliée à une station de base 5, dans un cône d'émission/réception 18 englobant la surface de l'élément mobile 2. Une étape d'émission 20 d'un nombre de bits de données à un débit binaire fixe, par le support d'information 6, en direction de l'antenne 13 lorsque le support d'information 6 est compris dans ledit cône 18. Une étape de détermination 21 d'au moins une caractéristique de ladite rotation à partir de calculs effectués par le microcontrôleur et du nombre de bits de données reçu par l'antenne 13. Et une étape de caractérisation 22 de l'élément mobile 2 en rotation.

L'invention peut plus particulièrement être mise en oeuvre pour un élément mobile effectuant un mouvement de translation, en tant que mouvement de rotation de rayon de courbure infini. Les caractéristiques de l'élément mobile mesurables sont identiques, à savoir la vitesse tangentielle de déplacement, le sens de déplacement et la position.

Il est entendu que ces modes de réalisations ne sont pas limitatifs et que l'invention peut s'inscrire dans tous types de dispositifs ayant un ou plusieurs éléments mobiles appartenant par exemple au domaine de l'automobile, de la robotique ou encore de l'automatique.

**Revendications**

1. Procédé pour caractériser un élément mobile (2) suivant une trajectoire fixe de rotation à partir d'au moins un support d'information (3) monté sur ledit élément mobile (2), et au moins une antenne (13) et un microcontrôleur (9), ledit procédé comportant :

   • une étape de génération par ladite antenne (13) d'un champ électromagnétique dans un cône (18) englobant une surface dudit élément mobile (2) et définissant une distance constante et connue de parcours du support d'information (3) dans le cône,
   **caractérisé en ce que** le procédé comprend en outre

   • une étape d'émission à un débit binaire fixe, par ledit support d'information (6), d'un nombre de bits de données en direction de ladite antenne (13) pendant toute la durée durant laquelle ledit support d'information (6) est compris dans ledit cône (18),
   • une étape de détermination par ledit microcontrôleur (9) de la vitesse dudit élément mobile (2) suivant ladite trajectoire de rotation à partir d'une analyse du nombre de bits de données reçues par ladite antenne (13) et de la distance de parcours.

2. Procédé selon l'une au moins des revendications 1 dans lequel l'élément mobile (2) effectue un mouvement de translation en tant que mouvement de rotation de rayon de courbure infini.

3. Procédé selon l'une au moins des revendications 1 à 2, **caractérisé en ce que** l'élément mobile (2) comportant au moins un deuxième support d'information portant des informations différentes du premier support d'information (6), le procédé détermine en outre le sens de déplacement dudit élément mobile (2), à partir des informations reçues sur la position absolue de chacun des supports d'information (6) sur l'élément mobile (2).

4. Procédé selon l'une au moins des revendications 1 à 3 **caractérisé en ce qu'**il caractérise en outre la position dudit élément mobile (2), déterminée à partir des informations reçues sur la position absolue de chacun des supports d'information (6) sur l'élément mobile (2).

5. Procédé selon l'une quelconque des revendications précédentes pour lequel ledit support d'information (6) comprend des données relatives à sa position sur ledit élément mobile (2).

6. Dispositif comprenant au moins un support d'information (6) monté sur un élément mobile (2) suivant une trajectoire fixe de rotation, et au moins une antenne (13) et un microcontrôleur (9)

   • ladite antenne (13) étant apte à générer un champ électromagnétique dans un cône (18) englobant une surface de l'élément mobile (2) et définissant une distance constante et connue de parcours du support d'information (3) dans le cône,

   **caractérisé en ce que**

   • ledit support d'information (6) est apte à émettre à un débit binaire fixe un nombre de bits de données en direction de ladite antenne (13) pendant toute la durée durant laquelle il est dans le cône (18), et

• ledit microcontrôleur (9) est apte à déterminer la vitesse dudit élément mobile (2) suivant ladite trajectoire fixe de rotation à partir d'une analyse du nombre de bits de données reçues par ladite antenne (13) et de la distance de parcours.

**7.** Dispositif selon la revendication 6 **caractérisé en ce que** ledit microcontrôleur (9) comprend des moyens de calculs.

**8.** Dispositif selon l'une au moins des revendications 6 à 7 **caractérisé en ce que** ledit support d'information (6) est compris dans l'élément mobile (2).

**9.** Dispositif selon l'une au moins des revendications 6 à 8 dans lequel ledit support d'information (6) est un transpondeur RFID.

**10.** Dispositif selon l'une au moins des revendications 6 à 9 dans lequel ladite antenne et ledit microcontrôleur son compris dans un lecteur (5).

**11.** Dispositif selon l'une au moins des revendications 6 à 10 dans lequel ledit support d'information (6) est auto-alimenté en énergie (15).

**Patentansprüche**

**1.** Verfahren zur Charakterisierung eines beweglichen Elements (2), das einer feststehenden Rotationsbahn folgt, ausgehend von zumindest einem Informationsträger (3), der auf dem besagten beweglichen Element (2) montiert ist, und zumindest einer Antenne (13) und einem Microcontroller (9), wobei das besagte Verfahren umfasst:

- einen Erzeugungsschritt durch die besagte Antenne (13) eines elektromagnetischen Feldes in einem Konus (18), der eine Oberfläche des besagten beweglichen Elements (2) einschließt, und eine konstante und bekannte Wegdistanz des Informationsträgers (3) im Konus definiert,

**dadurch gekennzeichnet, dass** das Verfahren darüber hinaus umfasst

- einen Sendeschritt mit einer feststehenden Bitrate einer Anzahl von Datenbits in Richtung der besagten Antenne (13) durch den besagten Informationsträger (6) während der gesamten Dauer, in der der besagte Informationsträger (6) in dem besagten Konus (18) enthalten ist,
- einen Bestimmungsschritt der Geschwindigkeit des besagten beweglichen Elements (2), das der besagten Rotationsbahn folgt, durch den besagten Microcontroller (9) ausgehend von einer Analyse der Anzahl der Datenbits, die durch die besagte Antenne (13) empfangen werden, und der Wegdistanz.

**2.** Verfahren nach zumindest einem der Ansprüche 1, wobei das beweglichen Element (2) eine Translationsbewegung als Rotationsbewegung mit einem unendlichen Kurvenradius durchführt.

**3.** Verfahren nach zumindest einem der Ansprüche 1 bis 2, **dadurch gekennzeichnet, dass**, da das bewegliche Element (2) zumindest einen zweiten Informationsträger umfasst, der Informationen trägt, die sich vom ersten Informationsträger (6) unterscheiden, das Verfahren darüber hinaus die Bewegungsrichtung des besagten beweglichen Elements (2) ausgehend von den empfangenen Informationen über die Absolutposition eines jeden der Informationsträger (6) auf dem beweglichen Element (2) bestimmt.

**4.** Verfahren nach zumindest einem der Ansprüche 1 bis 3, **dadurch gekennzeichnet, dass** es darüber hinaus die Position des besagten beweglichen Elements (2) charakterisiert, die ausgehend von den empfangenen Informationen über die Absolutposition eines jeden der Informationsträger (6) auf dem beweglichen Element (2) bestimmt wird.

**5.** Verfahren nach einem der vorstehenden Ansprüche, wobei der besagte Informationsträger (6) Daten in Bezug auf seine Position auf dem besagten beweglichen Element (2) umfasst.

**6.** Vorrichtung, zumindest einen Informationsträger (6) umfassend, der auf einem beweglichen Element (2) montiert ist, das einer feststehenden Rotationsbahn folgt, und zumindest eine Antenne (13) und einen Mocrocontroller (9), wobei

- die besagte Antenne (13) imstande ist, ein elektromechanisches Feld in einem Konus (18) zu erzeugen, der eine Oberfläche des beweglichen Elements (2) einschließt und eine konstante und bekannte Wegdistanz des Informationsträgers (3) im Konus definiert,

**dadurch gekennzeichnet, dass**

- der besagte Informationsträger (6) imstande ist, während der gesamten Dauer, in der der besagte Informationsträger in dem Konus (18) ist, mit einer feststehenden Bitrate eine Anzahl von Datenbits in Richtung der besagten Antenne (13) zu senden, und
- der besagte Microcontroller (9) imstande ist, die Geschwindigkeit des besagten beweglichen Elements (2), das der besagten feststehenden Rotationsbahn folgt, ausgehend von einer Analyse der Anzahl der Datenbits, die durch die besagte Antenne (13) empfangen werden, und der Wegdistanz zu bestimmen.

**7.** Vorrichtung nach Anspruch 6, **dadurch gekennzeichnet, dass** der besagte Microcontroller (9) Berechnungsmittel umfasst.

**8.** Vorrichtung nach zumindest einem der Ansprüche 6 bis 7, **dadurch gekennzeichnet, dass** der besagte Informationsträger (6) im beweglichen Element (2) enthalten ist.

**9.** Vorrichtung nach zumindest einem der Ansprüche 6 bis 8, wobei der besagte Informationsträger (6) ein RFID-Transponder ist.

**10.** Vorrichtung nach zumindest einem der Ansprüche 6 bis 9, wobei die besagte Antenne und der besagte Microcontroller in einem Lesegerät (5) enthalten sind.

**11.** Vorrichtung nach zumindest einem der Ansprüche 6 bis 10, wobei der besagte Informationsträger (6) eine Energie-Selbstversorgung (15) aufweist.

**Claims**

**1.** Method for characterising a mobile element (2) moving along a fixed rotation trajectory on the basis of at least one information medium (3) mounted on said mobile element (2), and at least one antenna (13) and a microcontroller (9), said method comprising:

- a step of generating by said antenna (13) an electromagnetic field in a cone (18) encompassing a surface of said mobile element (2) and defining a constant and known distance of the travel of the information medium (3) in the cone,

**characterised in that** the method further comprises

- a step of emitting at a fixed binary rate, by said information medium (6), a number of data bits towards said antenna (13) throughout the entire time during which said information medium (6) lies in said cone (18),
- a step of determining by said microcontroller (9) of the speed of said mobile element (2) according to said rotation trajectory on the basis of an analysis of the number of data bits received by said antenna (13) and the travel distance.

**2.** Method according to at least one of claims 1 wherein the mobile element (2) carries out a translation movement as a rotation movement of the radius of an infinite curvature.

**3.** Method according to at least one of claims 1 to 2, **characterised in that** the mobile element (2) comprising at least one second information medium carrying information that is different from the first information medium (6), the method furthermore determines the direction of movement of said mobile element (2), from information received on the absolute position of each one of the information mediums (6) on the mobile element (2).

**4.** Method according to at least one of claims 1 to 3 **characterised in that** it further characterises the position of said mobile element (2), determined from information received on the absolute position of each one of the information mediums (6) on the mobile element (2).

**5.** Method as claimed in any preceding claim for which said information medium (6) comprises data relative to its position on said mobile element (2).

**6.** Device comprising at least one information medium (6) mounted on a mobile element (2) moving along a fixed rotation trajectory, and at least one antenna (13) and a microcontroller (9):

- said antenna (13) being able to generate an electromagnetic field in a cone (18) encompassing a surface of the mobile element (2) and defining a constant and known travel distance of the information medium (3) in the cone, **characterised in that**
- said information medium (6) is able to emit at a fixed binary rate a number of data bits towards said antenna (13) throughout the entire time during which it is in the cone (18), and
- said microcontroller (9) is able to determine the speed of said mobile element (2) according to said fixed rotation trajectory on the basis of an analysis of the number of data bits received by said antenna (13) and the travel distance.

**7.** Device according to claim 6 **characterised in that** said microcontroller (9) comprises means for calculating.

**8.** Device according to at least one of claims 6 to 7 **characterised in that** said information medium (6) is comprised in the mobile element (2).

**9.** Device according to at least one of claims 6 to 8 wherein said information medium (6) is an RFID transponder.

**10.** Device according to at least one of claims 6 to 9 wherein said antenna and said microcontroller are

**EP 2 092 349 B1**

comprised in a reader (5).

11. Device according to at least one of claims 6 to 10 wherein said information medium (6) is self-supplied with energy (15).

FIGURE 1

FIGURE 2

FIGURE 3

FIGURE 4

FIGURE 5

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050076982 A
- JP 10115626 B
- US 20040027241 A
- WO 0112453 A
- WO 2006061737 A